(19) Europäisches Patentamt
European Patent Office
Office européen des brevets

(11) **EP 2 347 117 B1**

(12) **EUROPÄISCHE PATENTSCHRIFT**

(45) Veröffentlichungstag und Bekanntmachung des Hinweises auf die Patenterteilung:
**11.09.2019 Patentblatt 2019/37**

(21) Anmeldenummer: **09760077.9**

(22) Anmeldetag: **09.11.2009**

(51) Int Cl.:
*F02M 65/00* (2006.01)   *B05B 15/00* (2018.01)
*G01F 1/00* (2006.01)

(86) Internationale Anmeldenummer:
**PCT/AT2009/000425**

(87) Internationale Veröffentlichungsnummer:
**WO 2010/054416 (20.05.2010 Gazette 2010/20)**

(54) **VERFAHREN ZUM VERMESSEN VON STRÖMUNQSWEGEN IN VENTILEN**

METHOD FOR MEASURING FLOW PATHS IN VALVES

PROCÉDÉ DE MESURE DES TRAJETS D'ÉCOULEMENT DANS DES VANNES

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **17.11.2008 AT 17772008**

(43) Veröffentlichungstag der Anmeldung:
**27.07.2011 Patentblatt 2011/30**

(73) Patentinhaber: **Forschungsgesellschaft für Verbrennungskraftmaschinen und Thermodynamik mbH
8010 Graz (AT)**

(72) Erfinder:
 • **FIMML, Wolfgang
  8010 Graz (AT)**
 • **WIMMER, Andreas
  8010 Graz (AT)**
 • **CHMELA, Franz
  1090 Wien (AT)**

(74) Vertreter: **Patentanwaltskanzlei Hübscher
Spittelwiese 4
4020 Linz (AT)**

(56) Entgegenhaltungen:
**US-A1- 2005 241 367**

 • **DESANTES J M ET AL: "Measurements of Spray Momentum for the Study of Cavitation in Diesel Injection Nozzles" 3. März 2003 (2003-03-03), SAE TECHNICAL PAPER SERIES, SOCIETY OF AUTOMOTIVE ENGINEERS, WARRENDALE, PA, US, PAGE(S) 1 - 12 , XP002494762 ISSN: 0148-7191 Seiten 3-7**
 • **PAYRI R ET AL: "Using spray momentum flux measurements to understand the influence of diesel nozzle geometry on spray characteristics" 1. März 2005 (2005-03-01), FUEL, IPC SCIENCE AND TECHNOLOGY PRESS, GUILDFORD, GB, PAGE(S) 551 - 561 , XP002506552 ISSN: 0016-2361 das ganze Dokument**
 • **SCHMID U: "A robust flow sensor for high pressure automotive applications" SENSORS AND ACTUATORS A, ELSEVIER SEQUOIA S.A., LAUSANNE, CH, Bd. 97-98, 1. April 2002 (2002-04-01), Seiten 253-263, XP002506544 ISSN: 0924-4247**

**Beschreibung**

Technisches Gebiet

Die Erfindung betrifft ein Verfahren zum Vermessen von Strömungswegen in Ventilen für Flüssigkeiten und Gase, gemäß dem Anspruch 1.

Stand der Technik

Um Zeit und Kosten für die Entwicklung eines neuen Motors zu minimieren, sind verlässliche Simulationswerkzeuge zur Optimierung des Motorkreisprozesses erforderlich. Bedingt durch die steigende Anzahl an möglichen Freiheitsgraden durch die vermehrte Einführung von Common Rail Einspritzsystemen oder variablen Ventiltrieben liegt der Schwerpunkt auf leicht zu bedienenden Simulationsmethoden mit kurzer Rechenzeit. Zur Berechnung des Brennratenverlaufs als Grundlage für alle darauf aufbauenden Prozesse haben sich nulldimensionale Modelle auf der Basis des turbulenzgesteuerten Ansatzes für die Reaktionsgeschwindigkeit nach Magnussen als erfolgreich erwiesen. Die Ladungsturbulenz, also insbesondere die Dichte der turbulenten kinetischen Energie, wird dabei in direkt einspritzenden Dieselmotoren zum überwiegenden Teil aus dem Impuls der Einspritzstrahlen erzeugt. Deshalb ist die genaue Kenntnis dieser Größe eine unabdingbare Voraussetzung für die Richtigkeit des Simulationsergebnisses.

Es sind bereits verschiedene Verfahren und Systeme sowohl zur Bestimmung der Einspritzrate als auch der Düsenaustrittsgeschwindigkeit bekannt. Das Messprinzip des Boschrohres beruht auf der Messung der dynamischen Drucküberhöhung in einem mit Kraftstoff gefüllten Messrohr, die durch die Einspritzung in das Messrohr hervorgerufen wird und sich proportional zur Einspritzrate verhält. Im Unterschied zu anderen Messsystemen können mit dem Boschrohr sowohl Einspritzraten als auch Einspritzmengen als Einzelergebnisse simultan gemessen werden. Dieses System ist für Hochdruckeinspritzungen geeignet, wobei jedoch nicht, wie es beim motorischen Betrieb der Fall ist, in eine Gasatmosphäre, sondern in einer Flüssigkeit eingespritzt wird.

Die Veröffentlichung von Desantes et AL. "Measurements of Spary Momentum for the Study of Cavitation in Diesel Injection Nozzles" vom 3. März 2003, in SAE Technical Paper Series vom dem Society of Automotive Engineers zeigt den Oberbegriff des Anspruchs 1.

Aus der US 2005/241367 A1 ist eine Vorrichtung mit einer Einspritzpumpe, einem Einspritzventil und einer Messeinrichtung zur Bestimmung der Einspritzrate des Einspritzventils bekannt, wobei die Messeinrichtung eine quer zur Einspritzrichtung ausgerichtete Prallplatte für das Fluid umfasst, der eine in Einspritzrichtung auf die Prallplatte einwirkende Kraft messender Sensor zugeordnet ist.

Das "shot to shot" System arbeitet nach dem Messkolbenprinzip, wobei die Messeinheit in der Kraftstoffzuleitung des Einspritzinjektors bzw. Einspritzventils sitzt. Es ist somit eine Einspritzratenmessung am befeuerten Motor möglich.

Über die Bewegung des Messkolbens wird die Drehzahl eines Volumenzählers derart eingeregelt, dass die Druckdifferenz über das Messgerät "null" bleibt und damit der Durchfluss der Drehzahl proportional ist. Die der geförderten Kraftstoffmasse äquivalente Bewegung des Sensorkolbens wird gemessen und in ein Einspritzratensignal umgewandelt. Die Druckfestigkeit dieses Systems beträgt zur Zeit zirka 200 bis 300 bar und ist daher für die heutigen hohen Einspritzdrücke von modernen Dieseleinspritzsystemen nur beschränkt geeignet.

Nach einem weiteren bekannten Verfahren wird die Einspritzrate mittels des zeitlichen Verlaufs der druckabhängigen und daher unveränderlichen Schallgeschwindigkeit ermittelt. Die Einspritzung erfolgt in ein mit dem Prüfmedium gefülltes Messvolumen. Es wird dabei in ein konstantes Volumen eingespritzt und der theoretische Zusammenhang zwischen Druckanstieg, Dichtänderung und Schallgeschwindigkeit verwendet. Dieses System ist für hohe Einspritzdrücke geeignet, wobei wiederum nicht in eine Gasatmosphäre sondern in eine Flüssigkeit eingespritzt wird.

Mittels laseroptischer Messtechniken kann die Geschwindigkeit von Partikeln bzw. Tropfen in einem Strömungsfeld ermittelt werden. Ein zu einer Ebene aufgeweiteter Laserstrahl beleuchtet die in diesem Lichtschnitt befindlichen Partikel. Während eines kurzen Zeitabstandes werden zwei Bilder mit einer rechtwinkelig zum Lichtschnitt angebrachten Kamera erstellt. Meist werden hierzu zwei CCD-Chips verwendet. Durch Verfolgen der zeitlichen Bewegung der einzelnen Partikel in den beiden Bilden kann die Partikelgeschwindigkeit berechnet werden. Da der Dieseleinspritzstrahl im Düsenaustrittsbereich ein sehr hohes Absorptionsverhalten für Licht besitzt, ist es nicht möglich, mit dem Laserschnitt in das Strahlkerngebiet vorzudringen. Somit wird dieses Verfahren meist nur für Randgebiete des Dieselstrahls, wo eine geringere Tropfendichte vorherrscht, eingesetzt.

Die Penetrationsgeschwindigkeit eines Einspritzstrahls kann auch mittels Aufnahmen mit nur einer Hochgeschwindigkeitskamera bzw. einer Zeilenkamera detektiert werden. Da nur der Umriss des Strahls messtechnisch erfasst ist, ist somit nur eine Bestimmung der Geschwindigkeit der Einspritzstrahlspitze möglich und nicht die Austrittsgeschwindigkeit am Spritzloch, die aber zur Berechnung der in die Zylinderladung eingebrachten kinetischen Energie erforderlich wäre.

Darstellung der Erfindung

Ausgehend von einem Stand der Technik der vorgeschilderten Art liegt der Erfindung die Aufgabe zugrunde, ein alternatives, möglichst einfaches Verfahren anzugeben, mit dem die Einspritzrate und in weiterer Folge die kinetische Energie eines Fluidstrahles möglichst aufwandsarm und rasch gemessen werden können soll.

Die Erfindung löst diese Aufgabe dadurch, dass in einem weiteren Verfahrensschritt der Kraftstoffmassenstrom aus dem Impulsfluss durch Berechnung der Wurzel aus dem Produkt von Impulsfluss, Fluiddichte und effektiver Düsenquerschnittsfläche bestimmt wird und dass die Austrittsgeschwindigkeit des Fluides aus dem Einspritzventil durch Berechnung der Wurzel aus dem Quotienten von Impulsfluss und dem Produkt von effektiver Düsenquerschnittsfläche und Fluiddichte bestimmt wird.

Der besondere Vorteil des erfindungsgemäßen Verfahrens einschließlich der zugehörigen Auswertemethode liegt in der einfachen und kostengünstigen simultanen Bestimmung von Einspritzrate und Strahlgeschwindigkeit, aus deren Werten auch die kinetische Energie des Fluidstrahles in einfacher Weise errechnet werden kann. Ein weiterer Vorteil des erfindungsgemäßen Verfahrens ist darin zu sehen, dass der Kraftstoff aufgrund der Messmethode wie im realen Motor in Luft eingespritzt wird und nicht wie bei anderen, vorbekannten Messmethoden in Flüssigkeiten, was einen erheblichen Gewinn an Realitätsnähe bedeutet. Der aus dem Düsenloch des Einspritzventils austretende Kraftstoff wird erfindungsgemäß auf die insbesondere rechtwinkelig zur Hauptstrahlrichtung angeordnete Messfläche eines Kraftsensors, die Prallplatte, gerichtet. Dort wird der Kraftstoffstrahl in die Ebene der Prallplatte, quer zur Haupteinspritzrichtung, umgelenkt und die dabei auftretende Reaktionskraft gemessen und zeitabhängig von einer entsprechenden Recheneinheit aufgezeichnet. Zur Berechnung der kinetischen Energie der Einspritzstrahlen und der weiter daraus erzeugten Turbulenzdichte sind die Größen Einspritzrate und Strahlgeschwindigkeit erforderlich, die sich aus dem Ergebnis der Strahlkraftmessung ableiten lassen.

In einem weiteren Verfahrensschritt lässt sich dann der Kraftstoffmassenstrom aus dem vorgemessenen Impulsfluss durch Berechnung der Wurzel aus dem Produkt vom Impulsfluss, Fluiddichte und effektiver Düsenquerschnittsfläche bestimmen. Diese Daten können unmittelbar oder nach erfolgter Messung berechnet werden. Dadurch, dass der Impulsfluss direkt gemessen wird, ist eine besonders rasche Auswertung der aufgenommenen Daten möglich und können die Messergebnisse bei Bedarf unmittelbar nach Abschluss des Messverfahrens zur Verfügung stehen. Die Austrittsgeschwindigkeit des Fluides aus dem Einspritzventil kann in einem weiteren Verfahrenschritt durch Berechnung der Wurzel aus dem Quotienten von Impulsfluss und dem Produkt von effektiver Düsenquerschnittsfläche und Fluiddichte bestimmt werden. Die effektive Düsenquerschnittsfläche kann dabei mit bekannten Methoden berechnet bzw. vorbestimmt werden.

Zum Abschluss wird die kinetische Energie des Fluidstrahles aus der Einspritzrate und der Austrittsgeschwindigkeit des Fluides aus dem Einspritzventil bestimmt.

Eine Vorrichtung zur Durchführung des erwähnten Verfahrens umfasst insbesondere eine Einspritzpumpe, ein Einspritzventil und eine Messeinrichtung zur Bestimmung der Einspritzrate eines Einspritzventils. Die erfindungsgemäße Vorrichtung zeichnet sich dadurch aus, dass die Messeinrichtung eine quer zur Einspritzrichtung ausgerichtete Prallplatte für ein Fluid umfasst. Die in Einspritzrichtung auf die Prallplatte einwirkende Kraft wird mit einem Sensor gemessen. Die gesamten Messdaten werden von einer zugeordneten Recheneinheit aufgezeichnet, welche die aufgezeichneten Daten gegebenenfalls unmittelbar weiterverarbeitet und in einem Datenspeicher ablegt.

Um den Verdichtungsdruck in einem Zylinder bzw. in einer Brennkammer, also die höhere Dichte beim Einspritzen des Kraftstoffes, ebenfalls simulieren zu können, empfiehlt es sich, wenn das Einspritzventil und die Prallplatte in einer gasdichten Kammer angeordnet sind, der ein Druckgenerator zugeordnet ist.

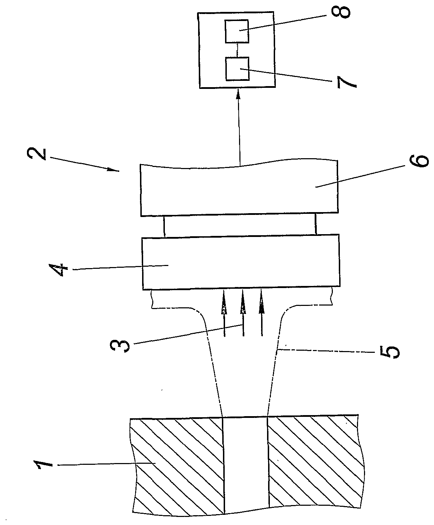

Kurze Beschreibung der Zeichnung

In der Zeichnung ist die Erfindung anhand eines Ausführungsbeispieles schematisch dargestellt. Die Figur zeigt eine Einspritzdüse im Querschnitt und eine der Einspritzdüse zugeordnete Messeinrichtung.

Weg zur Ausführung der Erfindung

Eine Vorrichtung zum Vermessen von Einspritzventilen 1 umfasst eine dem Einspritzventil 1 vorgelagerte und nicht näher dargestellte Einspritzpumpe, das Einspritzventil 1 und eine Messeinrichtung 2 zur Bestimmung der Einspritzrate des Einspritzventils 1. Der Messeinrichtung 2 gehört eine quer zur Einspritzrichtung 3 ausgerichtete Prallplatte 4 für das Fluid 5 zu, wobei der Prallplatte 4 ein die in Einspritzrichtung 3 auf die Prallplatte 4 einwirkende Kraft messender Sensor 6 zugeordnet ist, der an einen Datenspeicher 7 und eine Recheneinheit 8 zur Auswertung der aufgenommenen, dem Impulsfluss entsprechenden Kraft angeschlossen ist.

In der Zeichnung wird der Düsenkörper 1 gezeigt, aus dem der Kraftstoffstrahl 3 sich in Richtung des Kraftsensors 4 mit dessen Messebene 5 bewegt, um 90° umgelenkt wird und sich dann in radialer Richtung parallel zur Messebene ausbreitet. Dabei ist gemäß dem Impulserhaltungsgesetz der Strahlimpulsfluss in Spritzlochrichtung gleich der gemessenen Strahlkraft, wenn davon ausgegangen wird, dass der Strahl an der Platte genau um 90° umgelenkt wird und nicht z. B. von der Messfläche reflektiert wird.

Für diesen Messaufbau lässt sich der Impulssatz für den stationären Zustand daher folgendermaßen beschreiben (Gl. 1).

$$u_2 - u_1 = \frac{F}{\Delta m} \cdot \Delta t \qquad (1)$$

Das bedeutet, dass die Geschwindigkeitsabnahme umgekehrt proportional der Masse und direkt proportional der wirkenden Kraft und der Zeit ist, in der die Kraft auf die Masse wirkt. Um diesen Sachverhalt auf einen Massenstrom zu übertragen, wird ein Strahlabschnitt betrachtet, der in der Zeit $\Delta t$ durch die gegen die Strömungsrichtung wirkende Kraft -F von der Geschwindigkeit $u_1=u$ auf die Geschwindigkeit $u_2=0$ abgebremst wird (Gl. 2).

$$0 - u = \frac{-F}{\Delta m} \cdot \Delta t \qquad (2)$$

Nach Umstellung und Übergang auf den Differentialquotienten ergibt sich die Gl. 3 für die Strahlkraft.

$$F = \frac{\Delta m}{\Delta t} \cdot u = \dot{m} \cdot u = \dot{I} \qquad (3)$$

Für eine konstante Austrittsgeschwindigkeit entspricht also die an der Messfläche gemessene Reaktionskraft in der Tat dem Strahlimpulsfluss.

Zur Berechnung des Kraftstoff-Massenstroms wird zunächst Gl. 3 nach der Strahlgeschwindigkeit umgestellt (Gl. 4).

$$u = \frac{\dot{I}}{\dot{m}} \qquad (4)$$

Mit Hilfe der Kontinuitätsbeziehung (Gl. 5)

$$\dot{m} = \rho_{Kr} \cdot u \cdot A_{eff} \qquad (5)$$

folgt nach Einsetzen von Gl. 4 die Gl. 6 für den Massenstrom.

$$\dot{m} = \rho_{Kr} \cdot A_{eff} \cdot \frac{\dot{I}}{\dot{m}} \qquad (6)$$

Nach Umformung folgt schließlich Gl. 7 für die Berechnung der Einspritzrate aus der Strahlkraft.

$$\dot{m} = \sqrt{A_{eff} \cdot \rho_{Kr} \cdot \dot{I}} \qquad (7)$$

In dieser Formel bedeuten:

| | | |
|---|---|---|
| $\dot{m}$ | [kg/s] | Einspritzrate |
| $A_{eff}$ | [m²] | effektive Düsenquerschnittsfläche |
| $\rho_{Kr}$ | [kg/m³] | Kraftstoffdichte |
| $\dot{I}$ | [N] | Strahlimpulsfluss / Strahlkraft |

Die Kraftstoffdichte und die effektive Düsenquerschnittsfläche der Düse müssen vorher mit bekannten Messtechniken bestimmt werden.

Durch Kombination von Gl. 4 und Gl.7 ergibt sich die Strahlgeschwindigkeit, oder genauer der Austrittsgeschwindigkeit des Kraftstoffs aus dem Spritzloch der Einspritzdüse (Gl. 8).

$$u = \sqrt{\frac{\dot{I}}{A_{eff} \cdot \rho_{Kr}}} \qquad (8)$$

Mit Gl. 9 wird schließlich die kinetische Energie der Einspritzstrahlen berechnet, die dann nach Umwandlung in Turbulenzdichte die Brennrate bestimmt.

$$\dot{E}_{kin} = \dot{m}\frac{u^2}{2} = \frac{\dot{I}^{\frac{3}{2}}}{2\sqrt{A_{eff} \cdot \rho_{Kr}}} \qquad (9)$$

Das erfindungsgemäße Verfahren kann zunächst zur Entwicklung und Abstimmung von Brennratenmodellen genutzt werden. Weiters kann auch die Umkehrung des Verfahrens zur Auslegung und Abstimmung des Einspritzsystems benutzt werden, um einen erwünschten Brennratenverlauf zu erhalten

Das für einen Einspritzstrahl vorbeschriebene Mess- und Auswerteverfahren kann natürlich leicht auch bei Mehrlochdüsen angewendet werden, um zum Beispiel Unterschiede zwischen den einzelnen Strahlen festzustellen.

Neben der Bestimmung der Einspritzrate und der Düsenlochaustrittsgeschwindigkeit bietet die Strahlkraftmessung bzw. der Strahlkraftverlauf noch eine Reihe von weiteren interessanten Anwendungsgebieten. So können mit der Hilfe der Strahlkraftmessung Funktionsdetails des Einspritzsystems in ihren Auswirkungen auf Wirkungsgrad und Abgasemissionen untersucht oder auch das Langzeitverhalten der Einspritzsystemkomponenten beurteilt werden.

Das Verfahren eignet sich nicht nur für Dieselkraftstoffe, sondern auch für beliebige andere Kraftstoffe, wie zum Beispiel Biotreibstoffe, Schweröl, Ottokraftstoff und Treibgase.

**Patentansprüche**

1. Verfahren zum Vermessen von Strömungswegen in Ventilen für Flüssigkeiten und Gase, wie z.B. Kraftstoffe, zur Einspritzratenbestimmung, mit einer Einspritzpumpe, einem Einspritzventil und einer Messeinrichtung zur Bestimmung der Einspritzrate des Einspritzventils, wobei die Messeinrichtung eine quer zur Einspritzrichtung ausgerichtete Prallplatte für das Fluid umfasst, der ein die in Einspritzrichtung auf die Prallplatte einwirkende Kraft messender Sensor zugeordnet ist, wobei dem Sensor ein Datenspeicher und gegebenenfalls eine Recheneinheit zugeordnet sind, wobei das Fluid über das Einspritzventil einer Messeinrichtung zugeführt wird, mit folgenden Verfahrensschritten, Einspritzung des Fluids gegen eine Prallplatte, Umlenkung des Fluidstrahles in eine Richtung quer zu seiner Einspritzrichtung, sowie Messung und Aufzeichnung der durch den Fluidstrahl auf die Prallplatte einwirkenden, und dem Impulsfluss des auf die Prallplatte auftreffenden Fluidstrahl entsprechenden, Kraft, **dadurch gekennzeichnet, dass** in einem weiteren Verfahrensschritt der Kraftstoffmassenstrom aus dem Impulsfluss durch Berechnung der Wurzel aus dem Produkt von Impulsfluss, Fluiddichte und effektiver Düsenquerschnittsfläche bestimmt wird und dass die Austrittsgeschwindigkeit des Fluides aus dem Einspritzventil durch Berechnung der Wurzel aus dem Quotienten von Impulsfluss und dem Produkt von effektiver Düsenquerschnittsfläche und Fluiddichte bestimmt wird.

2. Verfahren nach Anspruch 1, **dadurch gekennzeichnet, dass** in einem weiteren Verfahrensschritt die kinetische Energie des Fluidstrahles aus der Einspritzrate und der Austrittsgeschwindigkeit des Fluides aus dem Einspritzventil bestimmt wird.

**Claims**

1. Method for measuring flow paths in valves for liquids and gases, such as e.g. fuels, for determining injection rates, having an injection pump, an injection valve and a measuring device for determining the injection rate of the injection valve, wherein the measuring device comprises a baffle plate for the fluid, which plate is orientated transversely to the injection direction and is allocated a sensor measuring the force acting on the baffle plate in the injection direction, wherein the sensor is allocated a data memory and possibly a computing unit, wherein the fluid is supplied to a measuring device via the injection valve, comprising the following method steps, injection of the fluid against a baffle plate, deflection of the fluid jet in a direction transverse to its injection direction, and measurement and recording of the force acting through the fluid jet on the baffle plate and corresponding to the pulse flow of the fluid jet striking the baffle plate, **characterised in that**, in a further method step, the fuel mass flow is determined from the pulse flow by calculating the root of the product of the pulse flow, fluid density and effective nozzle cross-section, and that the exit speed of the fluid from the injection valve is determined by calculating the root of the quotient of pulse flow and the product of the effective nozzle cross-section and fluid density.

2. Method as claimed in claim 1, **characterised in that**, in a further method step, the kinetic energy of the fluid jet is determined from the injection rate and the exit speed of the fluid from the injection valve.

**Revendications**

1. Procédé de mesure de trajets d'écoulement dans des vannes pour des liquides et des gaz, par exemple des carburants, pour la détermination du débit d'injection, comportant une pompe d'injection, une vanne d'injection et un dispositif de mesure pour la détermination du débit d'injection de la vanne d'injection, dans lequel le dispositif d'injection comprend une plaque d'impact, orientée transversalement à la direction d'injection, pour le fluide, un capteur mesurant la force agissant sur la plaque d'impact en direction d'injection lui étant associé, dans lequel une mémoire de données, et le cas échéant, une unité de calcul sont associées au capteur, dans lequel le fluide est envoyé par le biais de la vanne d'injection à un dispositif de mesure, comportant les étapes de procédé suivantes : injection du fluide contre une plaque d'impact, déviation du jet de fluide dans une direction transversalement à sa direction d'injection, ainsi que la mesure et l'enregistrement de la force exercée par le jet de fluide sur la plaque d'impact et correspondant au flux d'impulsion du jet de fluide frappant la plaque d'impact, **caractérisé en ce que**, dans une autre étape, du flux d'impulsion, le débit massique du carburant est déterminé par calcul de la racine, du produit, du flux d'impulsion, de la densité du fluide et de la surface de section transversale de buse effective et **en ce que**, de la vanne d'injection, la vitesse de sortie du fluide est déterminée par calcul de la racine, du quotient du flux d'impulsion et du produit de la surface de section transversale de buse effective et densité du fluide.

2. Procédé selon la revendication 1, **caractérisé en ce que**, dans une autre étape, l'énergie cinétique du jet de fluide est déterminée du débit d'injection et de la vitesse de sortie du fluide de la vanne d'injection.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2005241367 A1

**In der Beschreibung aufgeführte Nicht-Patentliteratur**

- Measurements of Spary Momentum for the Study of Cavitation in Diesel Injection Nozzles. **DESANTES et al.** SAE Technical Paper Series. Society of Automotive Engineers, 03. Marz 2003